(19) Europäisches Patentamt / European Patent Office / Office européen des brevets

(11) **EP 2 203 071 B1**

(12) **EUROPEAN PATENT SPECIFICATION**

(45) Date of publication and mention
of the grant of the patent:
**08.05.2019 Bulletin 2019/19**

(51) Int Cl.:
*A23L 7/126* (2016.01)   *A23L 29/281* (2016.01)
*A23L 33/185* (2016.01)   *A23P 10/20* (2016.01)

(21) Application number: **07821983.9**

(22) Date of filing: **29.10.2007**

(86) International application number:
**PCT/EP2007/061628**

(87) International publication number:
**WO 2009/056166 (07.05.2009 Gazette 2009/19)**

(54) **CEREAL-BASED BAR COMPOSITION OF THE CHEWY TYPE AND METHOD FOR PREPARING SUCH A CEREAL-BASED BAR COMPOSITION**

WEICHES GETREIDERIEGELPRODUKT UND VERFAHREN ZUR HERSTELLUNG SOLCH EINES GETREIDERIEGELPRODUKTS

COMPOSITION DE BARRE À BASE DE CÉRÉALES DU TYPE MOELLEUX ET PROCÉDÉ PERMETTANT DE PRÉPARER UNE TELLE COMPOSITION DE BARRE À BASE DE CÉRÉALES

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**07.07.2010 Bulletin 2010/27**

(73) Proprietor: **Tereos Starch & Sweeteners Belgium 9300 Aalst (BE)**

(72) Inventors:
• **REDL, Andreas**
  **B-9300 Aalst (BE)**
• **HENDRICKX, Lien**
  **B-9300 Aalst (BE)**

(74) Representative: **Ostyn, Frans et al**
**KOB NV**
**President Kennedypark 31 c**
**8500 Kortrijk (BE)**

(56) References cited:
EP-A- 0 306 773      EP-A- 1 743 529
WO-A-2007/008385   US-A- 4 041 181
US-A1- 2005 186 306

• REDL A ET AL: "RHEOLOGICAL PROPERTIES OF GLUTEN PLASTICIZED WITH GLYCEROL: DEPENDENCE ON TEMPERATURE, GLYCEROL CONTENT AND MIXING CONDITIONS" RHEOLOGICA ACTA, DIETRICH STEINKOPFF VERLAG, DARMSTADT, DE, vol. 38, 1 January 1999 (1999-01-01), pages 311-320, XP002427421 ISSN: 0035-4511
• POUPLIN M ET AL: "Glass transition of wheat gluten plasticized with water, glycerol, or sorbitol", JOURNAL OF AGRICULTURAL AND FOOD CHEMISTRY, AMERICAN CHEMICAL SOCIETY, US, vol. 47, no. 2, 1 January 1999 (1999-01-01), pages 538-543, XP002352916, ISSN: 0021-8561, DOI: 10.1021/JF980697W

**Description**

The invention relates to a cereal-based bar composition of the chewy type, comprising a cereal part and a binder part. The invention furthermore relates to a method for preparing such a cereal-based bar composition of the chewy type.

Cereal bars, also called granola bars, have become popular as a snack. Instead of a loose breakfast cereal consistency, granola bars are cold pressed into a bar shape or baked into that shape, thereby providing a more convenient snack.

The ingredients of a cereal bar normally comprise a cereal part and a binder part. The ingredients of the cereal part may be composed of flaked cereals, rolled cereals, expanded cereals or extruded cereals, and may comprise one or more of the grains selected from the group of wheat, oat, barley, rye, rice, maize, buckwheat, spelt, etc. The cereal part may furthermore comprise nuts and/or dried fruits.

The binder part that serves to bind the cereal part together in a stable manner can consist of different types, having as the major components:

- sugar-based mixed syrups, including glucose syrups;
- edible fat-based binders;
- binder systems developing viscosity, such as cold swelling starches, gelatine-based binders, pectins, or guar-based binders.

As described in Lebensmitteltechnik (1985), p. 210, the cereal bars thus obtained may vary between cereal bars of the soft, chewy or hard type. Cereal bars of the soft type have a binder part with a higher amount of water thereby providing a soft, chewing-friendly structure, while cereal bars of the hard type have higher sugar concentrations through which the binding becomes more solid and more crispy. Cereal bars of the chewy type mainly consist of a cereal part with a low boiled binding part, such as a sugar solution or a caramel mass, possible added with gelatine, gum Arabic, gelling agent or the like, such that the chewy properties are obtained.

The use of sugar-based or edible fat-based binders however, increases fast digesting carbohydrate content or calorie content, which is less desirable from a nutritional point of view. In addition, there is an increasing demand for food compositions showing an increased fullness factor (related to satiety) and reduced GI (Glycemic Index). This Glycemic Index is a numerical (mathematical) index that ranks carbohydrates based on their rate of glycemic response (i.e. their conversion to glucose within the human body). The Glycemic Index uses a scale of 0 to 100, with higher values given to foods that cause the most rapid rise in blood sugar. Pure glucose serves as a reference point, and is given a Glycemic Index (GI) of 100. The fullness factor is a mathematical formula, developed by NutritionData, that predicts satiety from the nutrient content of a given food or recipe. Foods with high fullness factor values are more likely to satisfy hunger with fewer calories. The US 2005/186306 patent application discloses a low carbohydrate cereal-like food product that however comprises fat.

In order to reduce sugar- orfat-based binder content, already a number of efforts have been undertaken, as illustrated in a number of documents cited in the following paragraphs.

In EP 0 348 196, a fat reduction in granola bar products is realised by substituting fat in the binder composition by a sucrose fatty acid ester based fat substitute. Although providing calorie reduction, it is known that such fat substitutes can lead to intestinal problems.

In EP 0 306 773, a sugar free binder composition is described suitable as a binder for cereal bars. The binder is composed of a sugar substitute and a protein hydrolysate in a ration of 3:1 up to 1:3, in an agglomerate form. The sugar substitute preferably is sorbitol in powder form and the protein hydrolysate is a wheat gluten hydrolysate or a gelatine hydrolysate. The cereal bars are then prepared by mixing the cereal ingredient with some water, after which the binder agglomerate is added. Thereby, an improved, simplified, faster and more effective process is claimed for preparing reduced sugar cereal bars.

Modified, hydrolysed proteins are needed as binder ingredients in order to obtain the desired products. Some water has to be added which must be removed afterwards.

WO 2007/008385 relates to a protein-based binder system comprising a modified wheat protein isolate, this in the range from 5 to 50% by weight, and various other binder ingredients such as a humectant (f.i. glycerol) from 0 to 50% by weight, a non-nutritive sweetener (f.i. sorbitol) from 0 up to 50% by weight and water from 5 to 60% by weight. Also some other proteins can be incorporated. These binders are able to replace the traditional carbohydrate based binders in food systems. However, in order to be suitable as a binder material, the protein isolate must be acid treated and reduced in order to provide reduced visco-elastic properties. At the same time, the protein should be soluble / dispersible in water thereby exhibiting greater extensibility, vitality and adhesiveness.

Additional modification of the protein ingredient, in order to make it soluble/dispersible is considered as a disadvantage.

In EP 1 782 698, a low calorie whole grain cereal bar is described, wherein the binding is realised using a carbohydrate-based binder partially composed of dietary fibre ingredients such as inulin, oligo-fructose or caramel. A cheap binder ingredient is thereby replaced by a clearly more expensive ingredient.

Apart from low sugar or low fat cereal bars, there is also quite some interest in high protein cereal bars.

In US 4,055,669, a high protein fat-occluded food composition useful as a binder is described, and a food or breakfast bar product prepared therefrom. The problem underlying the invention as disclosed in this patent is that the unmasked protein flavour causes problems. The solution proposed consists in providing a binder, the protein particles being coated with a binder fat thereby masking the off-flavours. Coating of these protein particles leads to additional steps, thus complicating the process, while adding additional fat.

High protein cereal bars of the chewy type using a high protein flaked food material containing partially hydrolysed soy isolate, are for instance described in US 2004/043128. Therein, it is described that a carbohydrate-binder is used to prepare the cereal bar of the chewy type. This low viscosity protein is needed to minimise torque, generated during extrusion processing.

In WO 2005/002366, high protein granola-style nutrition bars are disclosed which comprise 10% wt.% or more of soy and/or rice protein in the form of nuggets, at least one transition metal or transition metal compound, and 2 wt.% or more of a humectant such as glycerol. According to the applicant, these high protein granola-style nutrition bars do not develop an off-taste during storage, and do show good sensorial properties. The protein content of the nuggets of soy and/or rice protein are higher than 60%, preferably higher than 80%. In total, the nutrition bar typically contains between 12 and 40% of protein. The levels of carbohydrates in the nutrition bar are typically situated between 20 and 65%.

In the preparation of cereal bars of the chewy type, as described above in US4055669, US2004/043128 or WO2005002366, it is standard practice that heating is used to evaporate water from the binder and/or to melt the fat-based binders, before cooling the mass in order to solidify. This can be realised in a separate vessel or during an extrusion step. This however complicates the process by adding additional costs related to energy requirements.

A purpose of the invention is therefore to provide a cereal-based bar composition of the chewy type, having high protein content without adding fat or carbohydrates serving as binder agents, wherein the cereal-based bar composition shows a satiety inducing effect (or a high fullness factor), a reduced Glycemic Index and a variable chewy texture.

It has now surprisingly been found that this purpose of the invention can be solved by providing a cereal-based bar composition of the chewy type, comprising a cereal part and a binder part, wherein the binder part comprises a vital wheat gluten composition, as described in the appended claims.

Such a cereal-based bar composition has a high protein content, and shows a satiety inducing effect and a reduced Glycemic Index, this without the addition of carbohydrates or fats as binders. This is unexpected in view of the teachings of WO 2007/008385 as described above, since in WO 2007/008385 the modified wheat protein isolate comprises wheat gluten treated with an acid and a reducing agent.

In a cereal-based bar composition of the chewy type according to the invention, the binder part consists of 30 - 45 wt.% of a plasticizer composition and 55 - 70 wt.% of vital wheat gluten composition, more preferably 35 - 42 wt.% of a plasticizer composition and 58 - 65 wt.% of vital wheat gluten composition, and most preferably 35 - 40 wt.% of a plasticizer composition and 60 - 65 wt.% of vital wheat gluten composition.

It is observed that the interaction between a standard vital wheat gluten composition and a plasticizer composition in the binder part results in the desirable cereal-based bar composition of the invention, without the need for excessive heating or baking in order to remove excess water. Indeed, during the conditioning period, an irreversible transition in the binder part is observed resulting in the desired high protein cereal-based bar compositions of the chewy type.

The vital wheat gluten composition consists of 60 - 100 wt.% of vital wheat gluten and 0 - 40 wt.% of vegetable and/or animal proteins, more preferably of 80 - 100 wt.% of vital wheat gluten and 0 - 20 wt.% of vegetable and/or animal proteins, and most preferably of 90 - 100 wt.% of vital wheat gluten and 0 - 10 wt.% of vegetable and/or animal proteins.

The animal proteins may be selected among milk proteins, gelatine hydrolysates and/or plasma proteins.

The milk proteins may be selected among caseinates, caseins or whey protein concentrates or isolates.

The vegetable proteins may be selected among soy protein concentrates and isolates, modified wheat proteins, maize protein concentrates, leguminous proteins, sunflower proteins and protein concentrates obtained from oats, barley or rye.

The binder part comprises a plasticizer composition.

The plasticizer composition is composed of 70 - 100 wt.% glycerol and 0 - 30 wt.% of a second plasticizing agent, more preferably of 85 - 100 wt.% of glycerol and 0 - 15 wt.% of a second plasticizing agent, and most preferably of 90 - 100 wt.% of glycerol and 0 - 10 wt.% of a second plasticizing agent.

The said second plasticizing agent is selected from the group of sugar alcohols, reduced calorie carbohydrate ingredients and/or starch hydrolysates.

The sugar alcohol may be selected from the group of sorbitol, mannitol, maltitol, isomalt, xylitol, lactitol, erythritol and/or hydrogenated starch hydrolysate, the preferred sugar alcohol being sorbitol in the form of a crystalline powder or a concentrated syrup.

The reduced calorie carbohydrate ingredient is selected from the group of fructo-oligosaccharide, inulin, polydextrose, pyrodextrine and/or branched maltodextrin.

The composition of a favourable cereal-based bar composition of the chewy type according to the invention, is composed of 45 - 65 wt.% of the binder part, and 35 - 55 wt.% of the cereal part, more preferably 40 - 60 wt.% of the binder part, and 40 - 60 wt.% of the cereal part, and most preferably 50 - 60 wt.% of the binder part, and 40 - 50 wt.% of the cereal part.

The cereal part may comprise rolled, puffed, flaked, expanded and/or extruded cereals; and/or nuts or dry fruits.

The said cereals may be coated with sugars or chocolate.

The said cereals may be selected from the group of wheat, rye, barley, oat, spelt, buckwheat, maize, sorghum, rice, millet, triticale and/or quinoa.

A further purpose of the invention is to provide a suitable process for preparing a cereal bar of the chewy type not showing the disadvantages of the processes according to the state of the art, such as extensive energy input in order to remove excessive water or melt fat-based binders, followed by a cooling step in order to solidify the final product.

This purpose of the invention is solved by providing a method for preparing a cereal-based bar composition of the chewy type as described in the appended claims, wherein the cereal-based bar composition comprises a cereal part and a binder part, and wherein in order to produce cereal-based bar compositions according to the invention and as described above, the method comprises the steps of

- dry mixing a cereal part and a vital wheat gluten composition forming part of the binder part;
- adding a plasticizer composition forming part of the binder part to the dry mixture and mixing sufficiently in order to distribute the plasticizer composition homogeneously;
- shaping and cold pressing the homogenised mass, and
- conditioning the shaped and pressed mass, until a stable cereal-based bar composition structure is obtained.

The vital wheat gluten composition is thereby always used in powder form.

The mixing of the different ingredients of the cereal-based bar composition may be performed by means of a batch mixer selected from the group of rotary batch mixers, Hobart or Kenwood-type mixers, double rotor mixers or horizontal mixers containing plough-, paddle- or ribbon blade-type mixing tools.

The mixing of the different ingredients of the cereal-based bar composition may however also be performed by means of a continuous mixing device selected from the group of rotary continuous mixers, twin screw coating mixers or concentric screw mixers.

The conditioning of the shaped and pressed mass is performed at room temperature or by heating at moderate temperature conditions, until a stable cereal-based bar composition structure is obtained. The stable cereal-based bar composition structure can therewith be obtained over a longer or a shorter period. With a stable structure is meant that the product does not fall apart and all the ingredients stick well together, and wherein a certain quantity of force is needed to tear a part from the cereal bar.

The conditioning and the shaping of the cereal-based bar composition may be performed using standard equipment used for manufacturing cereal-based bar compositions according to the state of the art.

Because it is further observed that the chewy texture of a cereal-based bar composition may further develop into a tough to hard structure when it is submitted to prolonged conditioning at a temperature over 60°C, the chewy texture of the cereal-based bar composition of the chewy type is obtained by heating at 95°C during 5 - 10 minutes.

This invention will now be illustrated by the following examples, which should be considered as being not limiting to the scope of the invention as such and as expressed in the following claims.

The texture of cereal-based bar compositions may vary from soft to firm to tough or even hard. Gradations in binding, chewiness or texture can therewith be represented by the values as shown in table 1:

*Table 1: Values representing gradations in binding, chewiness or textures*

| Chewiness | | Binding | | Texture | |
|---|---|---|---|---|---|
| High | ++ | Very cohesive | ++ | Soft | 1 |
| Normal | + | Good | + | Firm | 2 |
| Low | - | Low | ~ | Tough | 3 |
| | | No binding | - | Hard | 4 |

## Examples 1-5

In this series of examples, the influence of the binder composition, at the same binder content, on the texture, chewiness and binding properties of the cereal-based bar compositions was evaluated.

Thereby, chewiness is defined as the gustatory sensation of laboured mastication due to sustained elastic resistance from a foodstuff.

The cereal-based bar compositions are prepared by first mixing the ingredients of a dry cereal part (cereals, nuts, and vital wheat gluten composition) in a Kenwood mixer until a homogeneous distribution of the different ingredients is obtained. In a next step glycerol (as the first plasticizing agent), sometimes in combination with some sorbitol syrup (as the second plasticizing agent), is added and further mixed until all ingredients are homogeneously distributed within the mix.

A portion of 150g of this mix is then shaped in a rectangular tile and pressed together under moderate pressure.

The thus pressed material is then conditioned at room temperature (25°C) for about 12 hours.

Another portion of 150g of this mixture is shaped and pressed the same way as above, but then submitted to a heating step in a convection oven at 95°C for 5 minutes, and then left at room temperature.

The results are disclosed in tables 2a and 2b.

*Table 2a: Ingredients of high protein cereal-based bar compositions of examples 1 - 5*

| Cereal-based bar composition ingredients (parts/100) | Example 1 | Example 2 | Example 3 | Example 4 | Example 5 |
|---|---|---|---|---|---|
| Cereals: | | | | | |
| Nestle Lion | 17,5 | 17,5 | 17,5 | 17,5 | 17,5 |
| Kellogg's coco pops | 17,5 | 17,5 | 17,5 | 17,5 | 17,5 |
| Chopped hazelnuts | 8,8 | 8,8 | 8,8 | 8,8 | 8,8 |
| Binder: | | | | | |
| Glycerol | 21,1 | 23,1 | 19,9 | 15,8 | 18,5 |
| Liquid sorbitol (70%ds) | - | - | - | 5,3 | 2,6 |
| Vital wheat gluten | 35,1 | 35,1 | 35,1 | 35,1 | 35,1 |

*Table 2b: Properties of the cereal-based bar compositions as shown in table 2a after conditioning at room temperature (12 hours) or at 95°C for 5 minutes*

| | Example 1 | | Example 2 | | Example 3 | | Example 4 | | Example 5 | |
|---|---|---|---|---|---|---|---|---|---|---|
| | RT | 95°C | RT | 95°C | RT | 95°C | RT | 95°C | RT | 95°C |
| Chewiness | + | + | ++ | + | + | + | + | + | + | + |
| Binding | + | + | ~/+ | + | + | + | ~/+ | ~/+ | + | + |
| Texture | 2 | 2 | 2 | 2-3 | 2 | 2-3 | 2 | 2 | 2 | 2 |

As can be concluded out of table 2b, the binding of the ingredients may vary from loose, low cohesive binding to very cohesive binding.

## Examples 6-9

These examples illustrate the possibility to combine vital wheat gluten with other vegetable or animal protein sources. Examples 6-8 are comparative examples.

*Table 3a: Ingredients of high protein cereal-based bar compositions of examples 6- 9*

| Cereal-based bar composition ingredients (parts/100) | Example 6 | Example 7 | Example 8 | Example 9 |
|---|---|---|---|---|
| Cereals: | | | | |
| Nestle Lion | 17,5 | 17,5 | 17,5 | 17,5 |
| Kellogg's coco pops | 17,5 | 17,5 | 17,5 | 17,5 |
| Chopped hazelnuts | 8,8 | 8,8 | 8,8 | 8,8 |

(continued)

| Binder: | | | | | |
|---|---|---|---|---|---|
| Glycerol | 21,1 | 21,1 | 21,1 | 21,1 |
| Liq.sorbitol (70% d.s.) | - | - | - | - |
| Whey protein isolate | 17,0 | | | 7,0 |
| Soy protein isolate | | 17,0 | | |
| Gelatine hydrolysate | | | 17,0 | |
| Vital wheat gluten | 18,1 | 18,1 | 18,1 | 28,1 |

*Table 3b: Properties of cereal-based bar compositions as shown in table 3a after conditioning at room temperature (12 hours) or at 95°C for 5 minutes*

| | Example 6 | | Example 7 | | Example 8 | | Example 9 | |
|---|---|---|---|---|---|---|---|---|
| | RT | 95°C | RT | 95°C | RT | 95°C | RT | 95°C |
| Chewiness | - | - | - | - | - | - | + | + |
| Binding | + | ~ | ~ | ~ | ~ | + | + | + |
| Texture | 2 | 3 | 3 | 3 | 1 | 2 | 2 | 2 |

As can be clearly deducted from tables 3a and 3b, depending on the amount of secondary vegetable or animal protein used, an important structural difference can be observed when comparing properties with those of the composition of example 1 (as shown in table 2a). While the properties of the products of examples 6 - 8 deviate from those of example 1, properties of example 9 strongly resemble those of example 1.

## Example 10

In the formulation of example 1, the Nestle Lion part is replaced by the same amount of a muesli mix. Processing conditions are the same.
The resulting cereal-based bar composition is very chewy, shows good binding and has a firm texture.

## Example 11

The fullness factor of the cereal bars of example 1 and example 10 was calculated using the NutritionData formula, and compared to commercial products.

$$FF = MAX[0,5, Min(5.0, 41.7/CAL^{0.7} + 0.05*PR + 6.17E\text{-}4*DF^3 - 7.25E\text{-}6*TF^3 + 0.617)]$$

Wherein:

- CAL is total calories per 100g;
- PR is grams protein per 100g;
- DF is grams dietary fibre per 100g;
- TF is grams total fat per 100g.

*Table 4: Comparison of fullness factor between cereal-based bar compositions according to the state of the art and cereal-based bar compositions according to the invention (examples 1 and 10)*

| | Fullness Factor |
|---|---|
| Nestle Fitness bar with strawberries | 0,912 |

(continued)

|  | Fullness Factor |
|---|---|
| Vitalinea LU red berries bar | 0,998 |
| Kellogg's Special K chocolate bar | 1,067 |
| Kellogg's Fruit 'n Fibre bar | 0,893 |
| Example 1 | 2,18 |
| Example 10 | 2,22 |

Out of this table, it can be concluded that, compared to the cereal-based bar compositions according to the state of the art, the cereal-based bar compositions according to the invention show an increased fullness factor (as already mentioned above related to satiety), as determined by the mathematical formula developed by Nutrition Data, and as cited in US 2006/188548. Using this formula, commercial cereal-based bar compositions such as mentioned in table 4, i.e. Nestle Fitness bar with strawberries, Vitalinea LU red berries bar, Kellogg's Special K chocolate bar and Kellogg's Fruit 'n Fibre bar, show a fullness factor varying between 0,9 and 1,1. Cereal-based bar compositions according to the invention however, using the same cereal/granola base materials, but comprising the protein based binder disclosed in the invention, show a fullness factor of about 2,2.

### Examples 12-16

In the following examples, as shown in table 5, the ratio of the binder part vs. the cereal part was varied.

*Table 5: Ingredients of cereal-based bar composition of examples 12 - 16*

| Cereal bar ingredients (parts/100) | Example 12 | Example 13 | Example 14 | Example 15 | Example 16 |
|---|---|---|---|---|---|
| Cereals: |  |  |  |  |  |
| Nestle Lion | 12 | 16 | 20 | 22 | 24 |
| Kellogg's coco pops | 12 | 16 | 20 | 22 | 24 |
| Chopped hazelnuts | 6 | 8 | 10 | 11 | 12 |
| Binder: |  |  |  |  |  |
| Glycerol | 26,2 | 22,5 | 18,7 | 16,9 | 15 |
| Vital wheat gluten | 43,8 | 37,5 | 31,3 | 28,1 | 25,0 |

In example 12 (cereals/binder ratio of 30/70), the composition of the binder part is highly visible, not well distributed. The resulting cereal-based bar composition is very cohesive.

In example 13 (40/60 ratio), the composition of the binder part is still visible but the visual aspect has much improved. All other examples (ex. 14-16) are nicely homogeneous, and do show good cohesiveness.

Out of table 5, it can be concluded that at high concentrations of the binder part, the distribution of the binder part in the resulting cereal-based bar composition becomes less homogeneous, compared to ratios used in previous examples.

### Claims

1. Cereal-based bar composition of the chewy type, comprising a cereal part and a binder part, **characterised in that** the binder part consists of 30 - 45 wt.% of a plasticizer composition and 55 - 70 wt.% of vital wheat gluten composition and the plasticizer composition is composed of 70 - 100 wt.% glycerol as a first plasticizing agent and 0 - 30 wt.% of a second plasticizing agent selected from the group of sugar alcohol, reduced calorie carbohydrate ingredient and/or starch hydrolysate, wherein the vital wheat gluten composition consists of 60 - 100 wt.% of vital wheat gluten and 0 - 40 wt.% of vegetable and/or animal proteins, wherein the reduced calorie carbohydrate ingredient is selected from the group of fructo-oligosaccharide, inulin, polydextrose, pyrodextrine and/or branched maltodextrin.

**2.** Cereal-based bar composition of the chewy type according to claim 1, **characterised in that** the binder part consists of 35 - 42 wt.% of a plasticizer composition and 58 - 65 wt.% of vital wheat gluten composition.

**3.** Cereal-based bar composition of the chewy type according to claim 1, **characterised in that** the binder part consists of 35 - 40 wt.% of a plasticizer composition and 60 - 65 wt.% of vital wheat gluten composition.

**4.** Cereal-based bar composition of the chewy type according to claims 1 to 3, **characterised in that** the vital wheat gluten composition consists of 80 - 100 wt.% of vital wheat gluten and 0 - 20 wt.% of vegetable and/or animal proteins, preferably the vital wheat gluten composition consists of 90 - 100 wt.% of vital wheat gluten and 0 - 10 wt.% of vegetable and/or animal proteins.

**5.** Cereal-based bar composition of the chewy type according to claim 4, **characterised in that** the animal proteins are selected among milk proteins, gelatine hydrolysates and/or plasma proteins.

**6.** Cereal-based bar composition of the chewy type according to claim 5, **characterised in that** the milk proteins are selected among caseinates, caseins or whey protein concentrates or isolates.

**7.** Cereal-based bar composition of the chewy type according to claim 4, **characterised in that** the vegetable proteins are selected among soy protein concentrates and isolates, modified wheat proteins, maize protein concentrates, leguminous proteins, sunflower proteins and protein concentrates obtained from oats, barley or rye.

**8.** Cereal-based bar composition of the chewy type according to claims 1 to 7, **characterised in that** the plasticizer composition is composed of 85 - 100 wt.% of glycerol as a first plasticizing agent and 0 - 15 wt.% of a second plasticizing agent, more preferably composed of 90 - 100 wt.% of glycerol as a first plasticizing agent and 0 - 10 wt.% of a second plasticizing agent.

**9.** Cereal-based bar composition of the chewy type according to claim 8, **characterised in that** the sugar alcohol is selected from the group of sorbitol, mannitol, maltitol, isomalt, xylitol, lactitol, erythritol and/or hydrogenated starch hydrolysate.

**10.** Cereal-based bar composition of the chewy type according to any one of claims 1 to 9, **characterised in that** the composition is composed of 45 - 65 wt.% of the binder part, and 35 - 55 wt.% of the cereal part, preferably the composition is composed of 40 - 60 wt.% of the binder part, and 40 - 60 wt.% of the cereal part, more preferably the composition is composed of 50 - 60 wt.% of the binder part, and 40 - 50 wt.% of the cereal part.

**11.** Cereal-based bar composition of the chewy type according to any one of claims 1 to 10, **characterised in that** the cereal part comprises rolled, puffed, flaked, expanded and/or extruded cereals; and/or nuts or dry fruits.

**12.** Method for preparing a cereal-based bar composition of the chewy type according to any one of the claims 1 to 11, wherein the cereal-based bar composition comprises a cereal part and a binder part, **characterised in that** the method comprises the steps of

- dry mixing a cereal part and a vital wheat gluten composition forming part of the binder part;
- adding a plasticizer composition forming part of the binder part to the dry mixture and mixing sufficiently in order to distribute the plasticizer composition homogeneously;
- shaping and cold pressing the homogenised mass, and
- conditioning the shaped and pressed mass, at room temperature or by heating at 95°C during 5 - 10 minutes, until a stable cereal-based bar composition structure is obtained.

**Patentansprüche**

**1.** Getreideriegelzusammensetzung vom Kautyp, umfassend einen Getreideteil und einen Bindemittelteil, **dadurch gekennzeichnet, dass** der Bindemittelteil aus 30-45 Gew.-% an einer Weichmacherzusammensetzung und 55-70 Gew.-% Vitalweizenglutenzusammensetzung besteht und die Weichmacherzusammensetzung aus 70-100 Gew.-% Glycerol als ersten Weichmacher und 0-30 Gew.-% an einem zweiten Weichmacher ausgewählt aus der Gruppe von Zuckeralkohol, kalorienreduziertem Kohlenhydratbestandteil und/oder Stärkehydrolysat besteht, wobei die Vitalweizenglutenzusammensetzung aus 60-100 Gew.-% Vitalweizengluten und 0-40 Gew.-% Pflanzen- und/oder Tierproteinen besteht, wobei der kalorienreduzierte Kohlenhydratbestandteil ausgewählt ist aus der Gruppe von Fructooligosaccharid, Inulin, Polydextrose, Polydextrin und/oder verzweigtem Maltodextrin.

2. Getreideriegelzusammensetzung vom Kautyp gemäß Anspruch 1, **dadurch gekennzeichnet, dass** der Bindemittelteil aus 35-42 Gew.-% an einer Weichmacherzusammensetzung und 58-65 Gew.-% Vitalweizenglutenzusammensetzung besteht.

3. Getreideriegelzusammensetzung vom Kautyp gemäß Anspruch 1, **dadurch gekennzeichnet, dass** der Bindemittelteil aus 35-40 Gew.-% an einer Weichmacherzusammensetzung und 60-65 Gew.-% Vitalweizenglutenzusammensetzung besteht.

4. Getreideriegelzusammensetzung vom Kautyp gemäß Ansprüchen 1 bis 3, **dadurch gekennzeichnet, dass** die Vitalweizenglutenzusammensetzung aus 80-100 Gew.-% Vitalweizengluten und 0-20 Gew.-% Pflanzen- und/oder Tierproteinen besteht, wobei die Vitalweizenglutenzusammensetzung vorzugsweise aus 90-100 Gew.-% Vitalweizengluten und 0-10 Gew.-% Pflanzen- und/oder Tierproteinen besteht.

5. Getreideriegelzusammensetzung vom Kautyp gemäß Anspruch 4, **dadurch gekennzeichnet, dass** die Tierproteine ausgewählt sind aus Milchproteinen, Gelatinehydrolysaten und/oder Plasmaproteinen.

6. Getreideriegelzusammensetzung vom Kautyp gemäß Anspruch 5, **dadurch gekennzeichnet, dass** die Milchproteine ausgewählt sind aus Kaseinaten, Kaseinen und Molkeproteinkonzentraten oder -isolaten.

7. Getreideriegelzusammensetzung vom Kautyp gemäß Anspruch 4, **dadurch gekennzeichnet, dass** die Pflanzenproteine ausgewählt sind aus Sojaproteinkonzentraten und -isolaten, modifizierten Weizenproteinen, Maisproteinkonzentraten, Hülsenfruchtproteinen, Sonnenblumenproteinen und Proteinkonzentraten, die aus Hafer, Gerste oder Roggen erhalten sind.

8. Getreideriegelzusammensetzung vom Kautyp gemäß Ansprüchen 1 bis 7, **dadurch gekennzeichnet, dass** die Weichmacherzusammensetzung aus 85-100 Gew.-% Glycerol als ersten Weichmacher und 0-15 Gew.-% an einem zweiten Weichmacher besteht, bevorzugter aus 90-100 Gew.-% Glycerol als ersten Weichmacher und 0-10 Gew.-% an einem zweiten Weichmacher besteht.

9. Getreideriegelzusammensetzung vom Kautyp gemäß Anspruch 8, **dadurch gekennzeichnet, dass** der Zuckeralkohol ausgewählt ist aus der Gruppe von Sorbit, Mannit, Maltit, Isomalt, Xylit, Lactit, Erythrit und/oder hydriertem Stärkehydrolysat.

10. Getreideriegelzusammensetzung vom Kautyp gemäß einem der Ansprüche 1 bis 9, **dadurch gekennzeichnet, dass** die Zusammensetzung aus 45-65 Gew.-% an dem Bindemittelteil und 35-55 Gew.-% an dem Getreideteil besteht, wobei die Zusammensetzung vorzugsweise aus 40-60 Gew.-% an dem Bindemittelteil und 40-60 Gew.-% an dem Getreideteil besteht, wobei die Zusammensetzung bevorzugter aus 50-60 Gew.-% an dem Bindemittelteil und 40-50 Gew.-% an dem Getreideteil besteht.

11. Getreideriegelzusammensetzung vom Kautyp gemäß einem der Ansprüche 1 bis 10, **dadurch gekennzeichnet, dass** der Getreideteil gequetschtes, gepufftes, flockenförmiges, expandiertes und/oder extrudiertes Getreide; und/oder Nüsse oder Trockenfrüchte umfasst.

12. Verfahren zur Herstellung einer Getreideriegelzusammensetzung vom Kautyp gemäß einem der Ansprüche 1 bis 11, wobei die Getreideriegelzusammensetzung einen Getreideteil und einen Bindemittelteil umfasst, **dadurch gekennzeichnet, dass** das Verfahren die Schritte umfasst:

- Trockenmischen eines Getreideteils und eines Vitalweizenglutenzusammensetzung-bildenden Teils des Bindemittelteils;
- Zugeben eines Weichmacherzusammensetzungbildenden Teils des Bindemittelteils zu dem Trockengemisch und ausreichendes Mischen, um die Weichmacherzusammensetzung homogen zu verteilen;
- Formen und Kaltpressen der homogenisierten Masse; und
- Konditionieren der geformten und gepressten Masse bei Raumtemperatur oder durch Erhitzen auf 95 °C für 5-10 Minuten, bis eine stabile Getreideriegelzusammensetzungsstruktur erhalten ist.

**Revendications**

1. Composition de barre à base de céréales du type moelleux, comprenant une part de céréales et une part de liant, **caractérisée en ce que** la partie de liant est constituée de 30-45% en poids d'une composition de plastifiant et de 55-70% en poids d'une composition de gluten vital de blé et la composition de plastifiant est composée de 70-100% en poids de glycérol comme premier agent plastifiant et de 0-30% en poids d'un deuxième agent plastifiant choisi dans le groupe constitué par un alcool de sucre, un ingrédient glucidique à teneur calorique réduite et/ou un hydrolysat d'amidon, où la composition de gluten vital de blé est constituée de 60-100% en poids de gluten vital de blé et de 0-40% en poids de protéines végétales et/ou animales, où l'ingrédient glucidique à teneur calorique réduite est choisi dans le groupe constitué par les fructooligosaccharides, l'inuline, un polydextrose, une pyrodextrine et/ou une maltodextrine ramifiée.

2. Composition de barre à base de céréales du type moelleux selon la revendication 1, **caractérisée en ce que** la partie de liant est constituée de 35-42% en poids d'une composition de plastifiant et de 58-65% en poids d'une composition de gluten vital de blé.

3. Composition de barre à base de céréales du type moelleux selon la revendication 1, **caractérisée en ce que** la partie de liant est constituée de 35-40% en poids d'une composition de plastifiant et de 60-65% en poids d'une composition de gluten vital de blé.

4. Composition de barre à base de céréales du type moelleux selon les revendications 1 à 3, **caractérisée en ce que** la composition de gluten vital de blé est constituée de 80-100% en poids de gluten vital de blé et de 0-20% en poids de protéines végétales et/ou animales, préférablement la composition de gluten vital de blé est constituée de 90-100% en poids de gluten vital de blé et de 0-10% en poids de protéines végétales et/ou animales.

5. Composition de barre à base de céréales du type moelleux selon la revendication 4, **caractérisée en ce que** les protéines animales sont choisies parmi les protéines du lait, les hydrolysats de gélatine et/ou les protéines du plasma.

6. Composition de barre à base de céréales du type moelleux selon la revendication 5, **caractérisée en ce que** les protéines du lait sont choisies parmi les caséinates, les caséines ou les concentrats ou isolats de protéines du lactosérum.

7. Composition de barre à base de céréales du type moelleux selon la revendication 4, **caractérisée en ce que** les protéines végétales sont choisies parmi les concentrats et isolats de protéines de soja, les protéines de blé modifiées, les concentrats de protéines de maïs, les protéines de légumineuses, les protéines de tournesol et les concentrats de protéines obtenus à partir de l'avoine, de l'orge ou du seigle.

8. Composition de barre à base de céréales du type moelleux selon les revendications 1 à 7, **caractérisée en ce que** la composition de plastifiant est composée de 85-100% en poids de glycérol comme premier agent plastifiant et de 0-15% en poids d'un deuxième agent plastifiant, plus préférablement composée de 90-100% en poids de glycérol comme premier agent plastifiant et de 0-10% en poids d'un deuxième agent plastifiant.

9. Composition de barre à base de céréales du type moelleux selon la revendication 8, **caractérisée en ce que** l'alcool de sucre est choisi dans le groupe constitué par le sorbitol, le mannitol, le maltitol, l'isomalt, le xylitol, le lactitol, l'érythritol et/ou un hydrolysat d'amidon hydrogéné.

10. Composition de barre à base de céréales du type moelleux selon l'une quelconque des revendications 1 à 9, **caractérisée en ce que** la composition est composée de 45-65% en poids de la partie de liant et de 35-55% en poids de la partie de céréales, préférablement la composition est composée de 40-60% en poids de la partie de liant et de 40-60% en poids de la partie de céréales, plus préférablement la composition est composée de 50-60% en poids de la partie de liant et de 40-50% en poids de la partie de céréales.

11. Composition de barre à base de céréales du type moelleux selon l'une quelconque des revendications 1 à 10, **caractérisée en ce que** la partie de céréales comprend des céréales aplaties, soufflées, floconnées, expansées et/ou extrudées ; et/ou des noix ou des fruits secs.

12. Méthode de préparation d'une composition de barre à base de céréales du type moelleux selon l'une quelconque des revendications 1 à 11, où la composition de barre à base de céréales comprend une partie de céréales et une partie de liant, **caractérisée en ce que** la méthode comprend les étapes consistant à :

- mélanger à sec une partie de céréales et une composition de gluten vital de blé formant une partie de la partie de liant ;
- ajouter une composition de plastifiant formant une partie de la partie de liant au mélange sec, et mélanger suffisamment afin de distribuer la composition de plastifiant de manière homogène ;
- façonner et presser à froid la masse homogénéisée ; et
- conditionner la masse façonnée et pressée, à température ambiante ou par chauffage à 95°C pendant 5-10 minutes, jusqu'à l'obtention d'une structure de composition de barre à base de céréales stable.

**EP 2 203 071 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005186306 A
- EP 0348196 A
- EP 0306773 A
- WO 2007008385 A
- EP 1782698 A
- US 4055669 A
- US 2004043128 A
- WO 2005002366 A
- US 2006188548 A

**Non-patent literature cited in the description**

- *Lebensmitteltechnik,* 1985, 210